## Europäisches Patentamt

## European Patent Office

## Office européen des brevets

(19)

(11) Numéro de publication: **0 251 849**
**B1**

(12)

# FASCICULE DE BREVET EUROPEEN

(45) Date de publication du fascicule du brevet:
**05.12.90**

(51) Int. Cl.⁵: **F16F 15/16, F16F 15/12**

(21) Numéro de dépôt: 87401302.2

(22) Date de dépôt: **10.06.87**

(54) Volant amortisseur, notamment pour dispositif de transmission de couple.

(30) Priorité: **19.06.86 FR 8608835**
**08.04.87 FR 8704954**

(43) Date de publication de la demande:
**07.01.88 Bulletin 88/1**

(45) Mention de la délivrance du brevet:
**05.12.90 Bulletin 90/49**

(84) Etats contractants désignés:
**DE GB IT**

(56) Documents cités:
**EP-A- 169 024**
**EP-A- 0 019 283**
**EP-A- 0 108 393**
**DE-A- 2 353 891**
**DE-A- 3 322 374**
**FR-A- 1 375 156**
**FR-A- 2 339 106**
**FR-A- 2 554 891**
**US-A- 3 464 233**

**AUTOMOTIVE ENGINEERING,**
vol. 93, no. 1, janvier 1985, page 85, Dallas, Texas, US; J.
YAMAGUCHI: "Flywheel damper reduces low speed
diesel noise and vibrations"
**PATENT ABSTRACTS OF JAPAN,**

(73) Titulaire: **VALEO, 64 Avenue de la Grande Armée,**
**F-75017 Paris(FR)**

(72) Inventeur: **Focqueur, Hervé, 6 Allée des Fonds de**
**Frettay, F-95130 Franconville(FR)**
Inventeur: **Jumel, Bernard, 13 rue Nungesser et Coli,**
**F-93380 Pierrefitte(FR)**
Inventeur: **Blard, Michel, 1 Passage de l'Industrie,**
**F-92130 Issy-Les-Moulineaux(FR)**

(74) Mandataire: **CABINET BONNET-THIRION, 95 Boulevard**
**Beaumarchais, F-75003 Paris(FR)**

(56) Documents cités: (suite)

vol. 5, no. 25 (M-55)[697], 14 février 1981; &
JP-A-55 152 943 (DAIKIN SEISAKUSHO K.K.) 28.11.1980

ACTORUM AG

## Description

L'invention se rapporte à un volant amortisseur notamment pour dispositif de transmission de couple comme par exemple un embrayage à friction pour véhicule automobile; elle concerne plus particulièrement un tel volant au sein duquel sont incorporés des moyens d'amortissement à l'égard des vibrations.

Il est usuel d'insérer des moyens d'amortissement de torsion en un point de la chaîne cinématique que constituent les mécanismes de transmission allant, sur un véhicule automobile, du moteur aux arbres de roue, de façon à filtrer les vibrations susceptibles de prendre naissance le long de cette chaîne cinématique, en particulier les vibrations provenant de l'acyclisme du moteur.

Le plus souvent, ces moyens d'amortissement sont agencés au sein du disque de friction de l'embrayage.

On a cependant déjà proposé d'incorporer de tels moyens d'amortissement au volant fixé au vilebrequin du moteur et constituant le plateau de réaction de l'embrayage. Cet agencement est particulièrement avantageux sur un véhicule pour lequel une minimisation des bruits apparaissant sous couple, doit être plus particulièrement recherchée. Un dispositif de ce genre est par exemple décrit dans la demande de brevet allemand No P 29 31 423. Le volant amortisseur décrit dans ce document comporte deux parties coaxiales montées rotatives l'une par rapport à l'autre et entre lesquelles sont agencés, d'une part, des ressorts à action circonférentielle en appui par leurs extrémités contre des moyens de butée ménagés dans lesdites parties, respectivement et, d'autre part, des moyens de frottement. En pratique, un tel système peut donner des résultats avantageux, notamment dans le cadre des applications évoquées ci-dessus, en raison du fait que la deuxième partie, la plus massive, du volant se trouve placée, dans la chaîne cinématique, en aval des moyens élastiques et des moyens de frottement. On obtient ainsi un meilleur filtrage des vibrations. Cependant, la liaison entre les deux parties du volant est mécaniquement complexe, spécialement en raison des moyens de frottement à sec qui sont habituellement de deux types. Il y a d'abord des moyens de frottement intervenant dès le début du débattement angulaire entre les deux parties coaxiales précitées et il y a également des moyens de frottement entrant en action pour un couple relativement élevé et constituant en fait un limiteur de couple.

Le document de brevet DE 2 353 891 et le brevet français No 1 375 156 décrivent des amortisseurs rotatifs à amortissement visqueux où l'agencement à amortissement visqueux est en service quelle que soit la fréquence des vibrations.

L'invention propose un volant amortisseur pour dispositif de transmission de couple, du type comportant au moins deux parties coaxiales montées rotatives l'une par rapport à l'autre autour d'un axe commun, comprenant des moyens élastiques à action circonférentielle fonctionnellement interposés entre ces deux parties, dans lequel une première partie est adaptée à être fixée à un arbre menant et une seconde partie massive est montée tournante sur la première partie par un roulement à billes ou analogue, ladite seconde partie formant un plateau de réaction d'embrayage, caractérisé en ce qu'il comporte un agencement à amortissement visqueux mécaniquement intercalé entre lesdites deux parties coaxiales et confiné à l'intérieur d'une cavité annulaire étanche définie entre celles-ci et remplie d'un fluide visqueux, ledit agencement à amortissement visqueux comportant, à l'intérieur de ladite cavité annulaire, au moins un groupe d'ailettes couplé en rotation à l'une desdites parties coaxiales par des liaisons de forme et en ce qu'un jeu circonférentiel prédéterminé est ménagé dans ces liaisons de forme, de façon à faire disparaître l'amortissement visqueux au-delà d'un seuil de fréquence déterminé par la valeur dudit jeu, ledit fluide visqueux étant de préférence non-Newtonien, par exemple un fluide au silicone.

L'agencement à amortissement visqueux peut par exemple être réalisé à partir de deux groupes d'ailettes respectivement solidaires en rotation desdites parties coaxiales, à l'intérieur de ladite cavité annulaire, cette dernière étant remplie du fluide visqueux, de préférence du type non-Newtonien. Selon les modes de réalisation, les ailettes peuvent être disposées dans des plans parallèles perpendiculaires à l'axe commun précité ou au contraire, dans des plans radiaux incluant cet axe. Le mouvement relatif des ailettes des deux groupes dans la cavité remplie du fluide visqueux, réalise l'amortissement recherché. Par ailleurs, les moyens élastiques à action circonférentielle peuvent être classiquement constitués par les habituels ressorts hélicoïdaux, régulièrement intercalés circonférentiellement entre des butées appartenant aux deux parties coaxiales précitées. Cependant, ces ressorts peuvent avantageusement être remplacés par au moins un disque en matériau élastomère monté entre lesdites parties coaxiales et solidaire de celles-ci. Le disque en matériau élastomère remplissant la fonction de moyen élastique à action circonférentielle est avantageusement choisi dans une qualité de matériau présentant un amortissement propre relativement faible vis à vis de celui de l'agencement visqueux de façon à mieux découpler la fonction des moyens élastiques de celle des moyens d'amortissement.

En ce qui concerne plus particulièrement l'amortissement, on utilise de préférence, comme mentionné ci-dessus, un fluide caractérisé par une bonne stabilité de viscosité en fonction de la température et par une viscosité dynamique qui diminue en fonction du gradient de la vitesse de cisaillement et procurant donc pour des fréquences croissantes, un amortissement inférieur à celui qui serait procuré par un fluide "Newtonien". Des fluides ou gels au silicone répondent de façon satisfaisante aux exigences définies ci-dessus. Ce fluide est laminé à l'intérieur de la cavité annulaire précitée par les mouvements relatifs des deux groupes d'ailettes, ce laminage produisant l'amortissement recherché. De préférence, l'un des groupes d'ailettes est monté avec jeu circonférentiel sur la partie du volant qui lui correspond, de façon à annuler leur amortissement à haute fréquence, là où l'amplitude des vibrations se trouve être inférieure à ce jeu.

La partie du volant la plus en aval dans la chaîne cinématique précitée peut avantageusement constituer le plateau de réaction d'un embrayage.

Un autre développement de l'invention concerne un volant amortisseur comme défini ci-dessus comportant deux parties coaxiales montées rotatives l'une par rapport à l'autre au moyen d'un roulement interposé entre elles, caractérisé en ce qu'il comporte un limiteur de couple à frottement sec interposé entre lesdites deux parties coaxiales.

Ainsi, entre autres avantages, le limiteur de couple assure non seulement sa fonction principale d'organe de sécurité en permettant un glissement rotatif entre les deux parties coaxiales chaque fois que le couple transmis dépasse une valeur maximum prédéterminée, mais ce faisant, il permet aussi d'éviter le mattage du chemin de roulement en modifiant les positions des billes entre les cages de roulement.

L'invention sera mieux comprise et d'autres avantages de celle-ci apparaîtront plus clairement à la lumière de la description qui va suivre de plusieurs volants amortisseurs conformes à son principe, donnée uniquement à titre d'exemple, et faite en référence aux dessins non limitatifs annexés dans lesquels:

- la figure 1 est une demi-coupe partielle d'un embrayage incluant un volant amortisseur conforme à l'invention, utilisé en tant que plateau de réaction;
- la figure 2 est une vue selon la flèche II de la figure 1, avec arrachement partiel;
- la figure 3 est une vue analogue à la figure 1 illustrant une variante possible; et
- la figure 4 est une autre vue analogue à la figure 1 illustrant une autre variante possible;
- la figure 5 est une demi-coupe en élévation d'un autre embrayage à friction incorporant un volant amortisseur conforme à l'invention;
- la figure 6 est une vue analogue à la figure 5, illustrant un autre mode de réalisation possible; et
- la figure 7 est une vue de détail illustrant une variante du mode de réalisation de la figure 6.

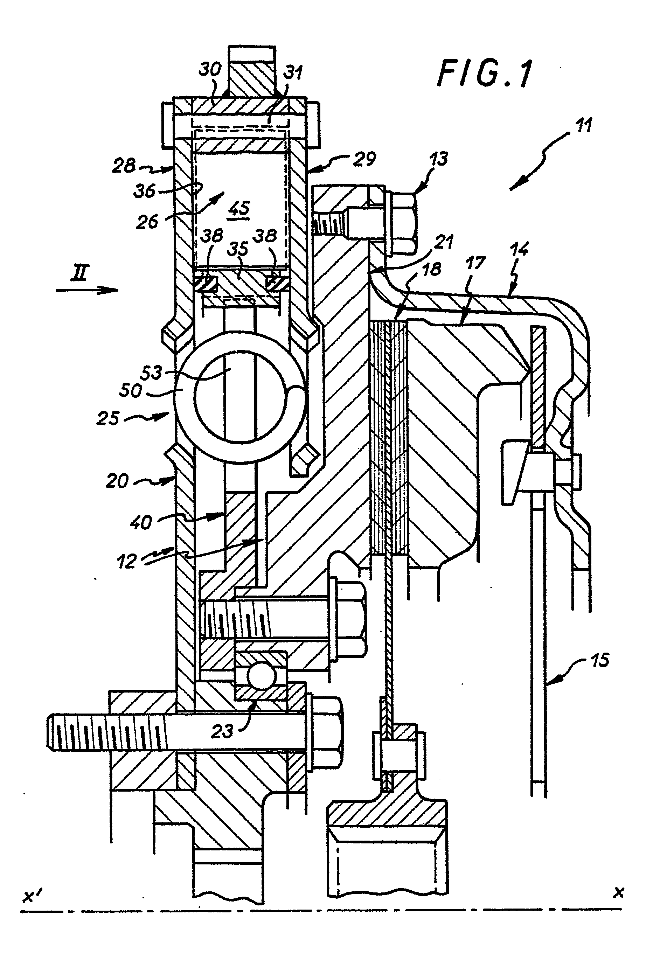

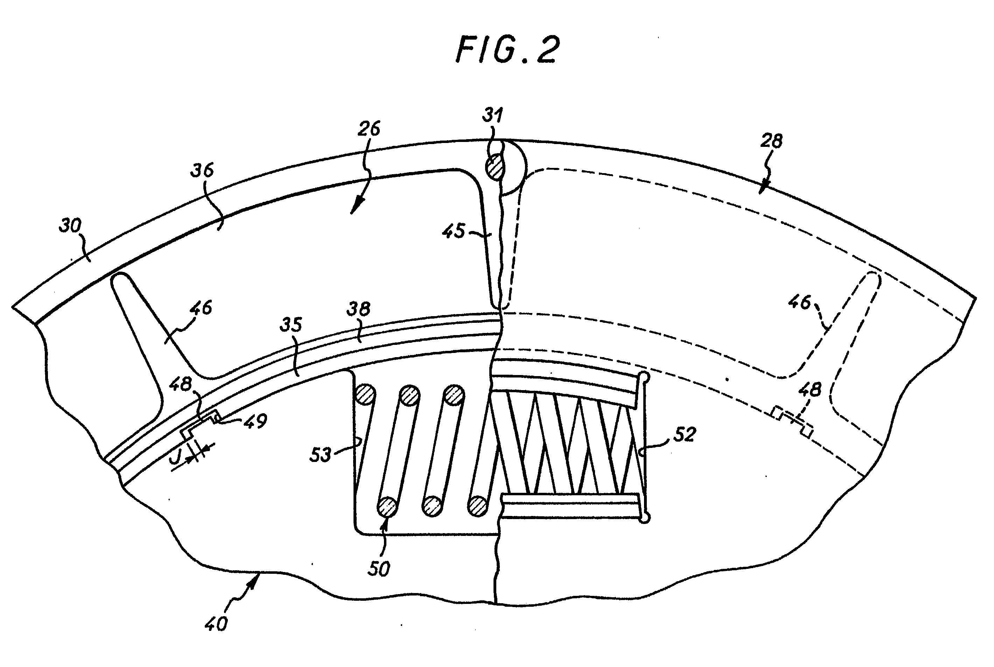

En se référant plus particulièrement aux figures 1 et 2, on a représenté partiellement un embrayage à friction 11, essentiellement composé d'un volant amortisseur 12 formant aussi le plateau de réaction de cet embrayage, d'une pièce annulaire 14 en tôle emboutie communément appelée couvercle, d'un organe de serrage et de débrayage 15, ici un diaphragme, d'un plateau de pression 17 et d'un disque de friction 18. Le volant amortisseur 12 est solidaire d'un arbre menant, non représenté, tel que le vilebrequin d'un moteur. Le couvercle 14 est fixé par des vis 13 à ce volant et abrite, classiquement le diaphragme 15, le plateau de pression 17 et le disque de friction 18. Le diaphragme 15 est susceptible, lors d'une manoeuvre d'embrayage, de se déformer et de solliciter en position d'engagement le plateau de pression 17, solidaire en rotation du couvercle mais axialement mobile par rapport à lui, en direction du plateau de réaction. Le disque de friction 18, solidaire en rotation d'un arbre mené, non représenté, est intercalé axialement entre le plateau de réaction et le plateau de pression de façon à pouvoir être enserré entre eux sous la sollicitation du diaphragme. L'arbre menant et l'arbre mené précités admettent le même axe x'x.

Le volant amortisseur se compose de deux parties coaxiales 20, 21, montées rotatives l'une par rapport à l'autre autour de leur axe commun x'x, à savoir une première partie 20 plus particulièrement fixée à l'arbre menant et une seconde partie 21, massive, montée sur la première partie 20 par l'intermédiaire d'un roulement à billes 23, cette seconde partie formant plus spécifiquement le plateau de réaction de l'embrayage. La première partie 20 abrite plus particulièrement, quant à elle, des moyens élastiques à action circonférentielle 25, d'une part, et un agencement à amortissement visqueux 26, d'autre part. Les moyens élastiques 25 et l'agencement 26 sont tous deux mécaniquement intercalés entre lesdites parties coaxiales 20 et 21. Plus particulièrement, s'agissant de l'agencement à amortissement visqueux des figures 1 et 2, la première partie 20 du volant comporte deux flasques 28, 29 en forme de disques, perpendiculaires à l'axe x'x et maintenus parallèles et espacés l'un de l'autre par une entretoise annulaire externe 30 portant la couronne de démarreur, à laquelle ils sont fixés au moyen de boulons 31, rivets ou analogues, traversant des perçages ménagés dans l'épaisseur de ladite entretoise. Ce montage définit, avec un anneau interne 35, une cavité annulaire étanche 36 à l'intérieur de laquelle se trouve confiné l'agencement à amortissement visqueux 26. L'anneau interne 35 comporte deux gorges circulaires latérales ménagées dans l'épaisseur de ses extrémités axiales et abritant des joints d'étanchéité 38, respectivement en contact avec les faces en regard des flasques 28, 29. Cet anneau 35 est couplé en rotation à ladite seconde partie 21 du volant et plus particulièrement à une âme centrale 40, en forme de disque, de celle-ci. Ici, l'âme 40 est rapportée par vissage sur la partie 21.

Comme le montre clairement la figure 2, l'agencement à amortissement visqueux 26 comporte, à l'intérieur de la cavité annulaire 36 étanche, deux groupes d'ailettes respectivement solidaires en rotation desdites parties coaxiales 20 et 21, tandis que la cavité annulaire 36 est remplie d'un fluide visqueux de type "non-Newtonien", selon la définition qui précède. Plus précisément ici, les ailettes s'étendent dans des plans radiaux passant par l'axe commun x'x et l'agencement est tel que chaque ailette d'un groupe quelconque soit intercalée circonférentiellement entre deux ailettes de l'autre groupe. On distingue ainsi un premier groupe d'ailettes 45 venues de moulage avec la paroi interne de l'entretoise annulaire 30 et faisant saillie radialement intérieurement par rapport à celle-ci dans la cavité 36 et un second groupe d'ailettes 46 venues de moulage avec la paroi externe de l'anneau interne 35 et faisant saillie radialement extérieurement par rapport à celle-ci, dans cette même cavité 36. Les bords libres des ailettes sont judicieusement espacés des parois de la cavité annulaire pour que le fluide visqueux puisse être laminé de part et d'autre desdites ailettes, de façon à procurer l'amortissement requis. Par ailleurs, il est à noter que l'anneau interne 35 est engagé avec un jeu circonférentiel prédéterminé J sur une surface cylindrique de la seconde partie 21. Cette surface cylindrique est ici, plus particulièrement constituée par le bord externe de l'âme 40. Pour ce faire, des liaisons de forme 48, 49 sont définies entre ledit anneau interne et ladite âme. Elles comprennent des saillies 48 prévues à la périphérie de l'âme 40 et engagées dans des encoches correspondantes 49 définies dans la paroi interne de l'anneau 35, ces encoches étant plus larges circonférentiellement, que lesdites saillies, pour ménager le jeu J précité.

Selon le mode de réalisation des figures 1 et 2, les moyens élastiques à action circonférentielle 25 comportent plusieurs ressorts hélicoïdaux 50, travaillant en compression, régulièrement interposés circonférentiellement entre des butées appartenant respectivement aux parties coaxiales 20 et 21. Ici, chaque ressort 50 est en appui, d'une part, contre des bords 52 radiaux définis le long de fenêtres ménagées dans les flasques 28 et 29 pour abriter ledit ressort et, d'autre part, contre une portée 53 de l'âme 40 définie par le bord d'une échancrure de celle-ci dans laquelle est monté ce même ressort.

En fonctionnement, les vibrations sont amorties par l'action combinée de l'agencement à amortissement visqueux et des moyens élastiques à action circonférentielle, c'est-à-dire ici par des variations de compression des ressorts et par un mouvement angulaire relatif entre les ailettes des deux groupes à l'intérieur de ladite cavité annulaire. Plus précisément, pour les oscillations à basses fréquences, c'est-à-dire de relativement grandes amplitudes, les ailettes 46 transmettent pratiquement intégralement leur mouvement à l'âme 40, c'est-à-dire à la seconde partie 21, le jeu J précité étant négligeable devant l'amplitude des oscillations. Ainsi, globalement, pour ces vibrations à basses fréquences, les ailettes 46 sont solidarisées en rotation à ladite seconde partie 21 de sorte que le filtrage des oscillations est réalisé à la fois par les moyens élastiques à action circonférentielle et par l'amortissement visqueux.

En revanche, le jeu J permet de mettre l'agencement à amortissement visqueux hors service lorsque les vibrations à écrêter sont d'une haute fréquence (par exemple de l'ordre de 50 Hz et plus) et par conséquent d'une amplutude relativement faible inférieure au jeu J, ce qui entraîne un découplage entre l'agencement à amortissement visqueux et la seconde partie 21. L'amortissement visqueux disparaît donc au-delà d'un seuil de fréquence déterminé par la valeur du jeu J. Ainsi, à basses fréquences, on bénéficie en majeure partie de l'amortissement visqueux tandis qu'aux hautes fréquences, l'amortissement est très faible et le filtrage des oscillations est essentiellement assuré par les moyens élastiques à action circonférentielle.

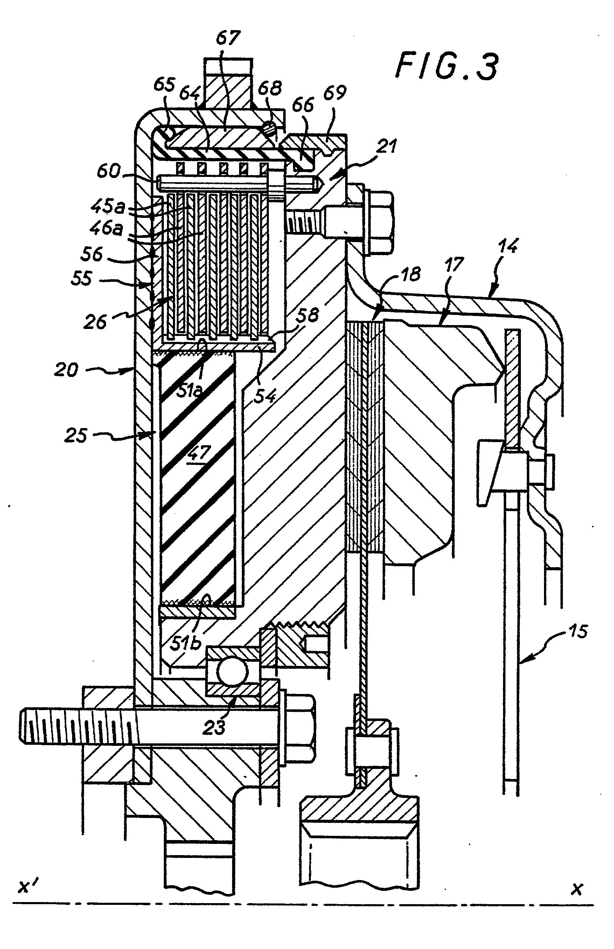

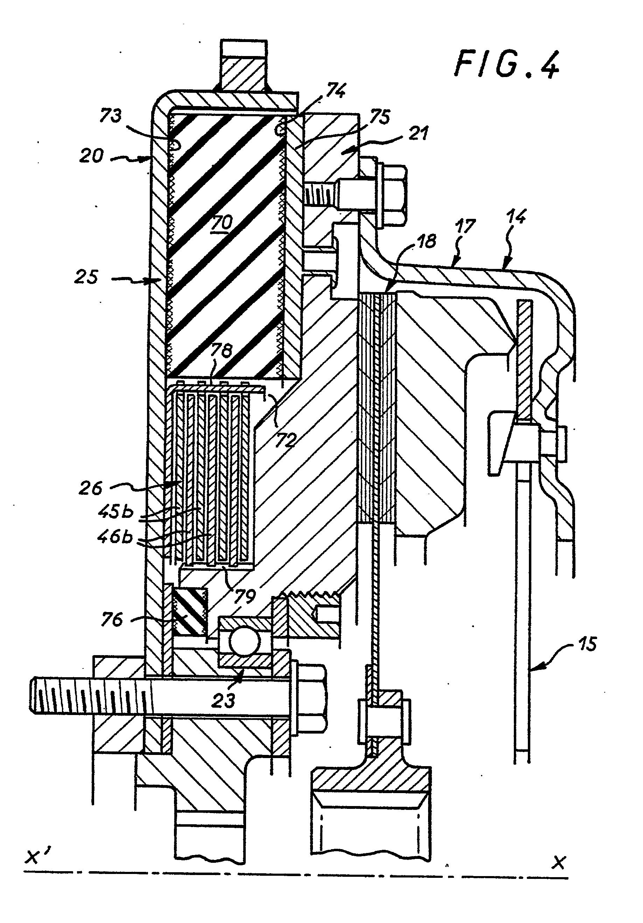

Dans le mode de réalisation des figures 3 et 4, les éléments de structure analogues à ceux de la figure 1 portent les mêmes références numériques et ne seront pas décrits à nouveau. Selon le mode de réalisation de la figure 3, les moyens élastiques à action circonférentielle 25 sont constitués par un disque épais en matériau élastomère 47, à faible amortissement propre, adhérisé par ses faces cylindriques externe 51a et interne 51b à des portées cylindriques correspondantes, appartenant respectivement à ladite première partie 20 et à ladite seconde partie 21. Le disque 47, solidaire en rotation de chacune des parties 20, 21, travaille ainsi en torsion. La portée cylindrique 54 à laquelle est fixée la face cylindrique externe 51a du disque 47, appartient à une pièce annulaire 55 à section en L fixée par sa face radiale 56 à ladite première partie 20. Cette portée cylindrique 54 porte, à sa surface externe, des indentations longitudinales 58, ici des cannelures, établissant la liaison en rotation entre les ailettes 45a du premier groupe et cette portée cylindrique 54, donc ladite première partie 20. Dans ce mode de réalisation, les ailettes 45a et 46a des deux groupes définissant l'agencement à amortissement visqueux, ont la forme de disques annulaires et sont disposés dans des plans parallèles, perpendiculairement à l'axe x'x. Les ailettes des deux groupes sont imbriquées axialement les unes entre les autres. Les ailettes 45a comportent ainsi à leur périphérie interne, des encoches correspondant aux indentations longitudinales 58 et ces liaisons de forme entre les ailettes 45a et la portée cylindrique 54 sont mises à profit pour ménager le même jeu circonférentiel J que dans l'exemple précédent. Pour cela, il suffit que les encoches des ailettes 45a soient plus larges que les indentations 58 correspondantes. Les ailettes 46a sont, quant à elles percées extérieurement et engagées sur des tiges 60 parallèles à l'axe x'x et solidaires de ladite seconde partie 21. Bien entendu, le jeu J pourrait être ménagé entre les ailettes 46a et ces tiges 60. L'étanchéité de la cavité annulaire 36 remplie de fluide visqueux non Newtonien est réalisée, radialement intérieurement, par le disque 47 lui-même et radialement extérieurement, par un anneau 64 en matériau élastomère comportant des bourrelets circulaires 65, 66. Le bourrelet 65 est serré entre ladite première partie 20 et une bague 67 fixée à l'intérieur d'une portée cylindrique de la première partie 20 par un jonc 68. Le bourrelet 66 est engagé dans une gorge de ladite seconde partie 21 et immobilisé dans celle-ci par une bague extérieure 69. L'anneau 64 travaille donc en cisaillement.

Dans le mode de réalisation de la figure 4, le disque de matériau élastomère 70 formant les moyens élastiques à action circonférentielle 25, est disposé radialement vers l'extérieur par rapport à la cavité annulaire 72 dans laquelle est confiné l'agencement à amortissement visqueux 26. Le disque 70 est ici adhérisé par ses faces d'extrémité axiale 73 et 74, respectivement à ladite première partie 20, directement, et à ladite seconde partie 21, par l'intermédiaire d'un socle annulaire 75 riveté à celle-ci. Le disque 70 travaille donc en cisaillement et assure par ailleurs l'étanchéité radiale externe de la cavité 72. L'étanchéité radiale interne de cette même cavité est assurée par un anneau de matériau élastomère 76 également adhérisé entre lesdites parties coaxiales 20 et 21.

Dans l'agencement à amortissement visqueux, les ailettes 45b du premier groupe sont solidaires en rotation d'une virole 78 fixée à ladite première partie 20 tandis que les ailettes 46b du second groupe sont munies, à leur périphérie interne, d'encoches engagées à jeu J sur des indentations longitudinales 79 ménagées sur un tronçon cylindrique de ladite seconde partie 21.

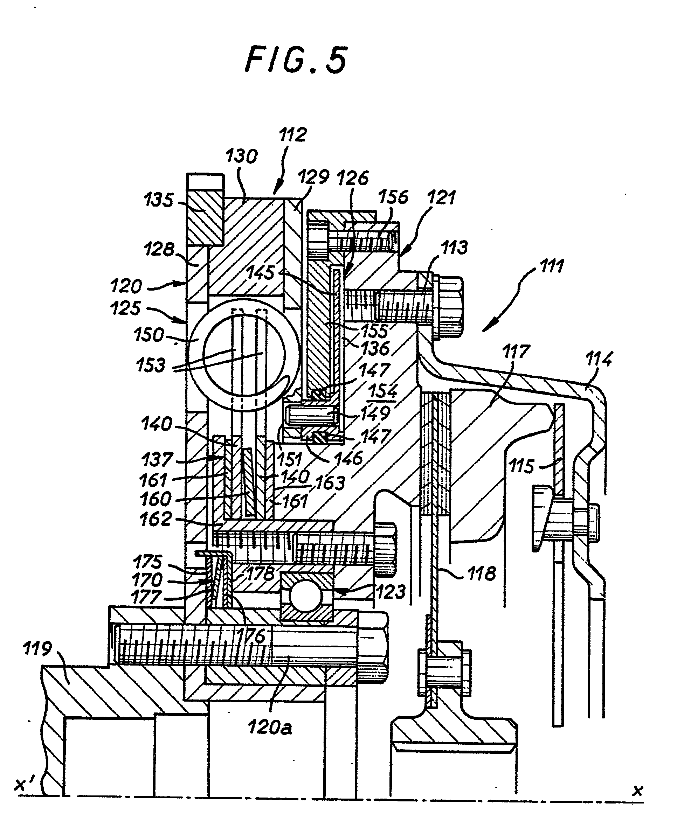

En se reportant plus particulièrement à la figure 5, on a représenté partiellement un embrayage à friction 111 essentiellement composé d'un volant amortisseur 112 formant aussi le plateau de réaction de cet embrayage, d'une pièce annulaire 114 en tôle emboutie communément appelée couvercle, d'un organe de serrage et de débrayage 115, ici un diaphragme, d'un plateau de pression 117 et d'un disque de friction 118. Le volant amortisseur 112 est solidaire d'un arbre menant 119, tel que le vilebrequin d'un moteur. Le couvercle 114 est fixé par des vis 113 à ce volant et abrite classiquement le diaphragme 115, le plateau de pression 117 et le disque de friction 118. Le diaphragme 115 est susceptible, lors d'une manoeuvre d'embrayage, de se déformer et de solliciter en position d'engagement le plateau de pression 117, solidaire en rotation du couvercle mais axialement mobile par rapport à lui, en direction du plateau de réaction. Le disque de friction 118, solidaire en rotation d'un arbre mené, non représenté, tel que l'arbre d'entrée de la boîte de vitesses est intercalé axialement entre le plateau de réaction et le plateau de pression de façon à pouvoir être enserré entre eux sous la sollicitation du diaphragme. L'arbre menant et l'arbre mené précités admettent le même axe x'x.

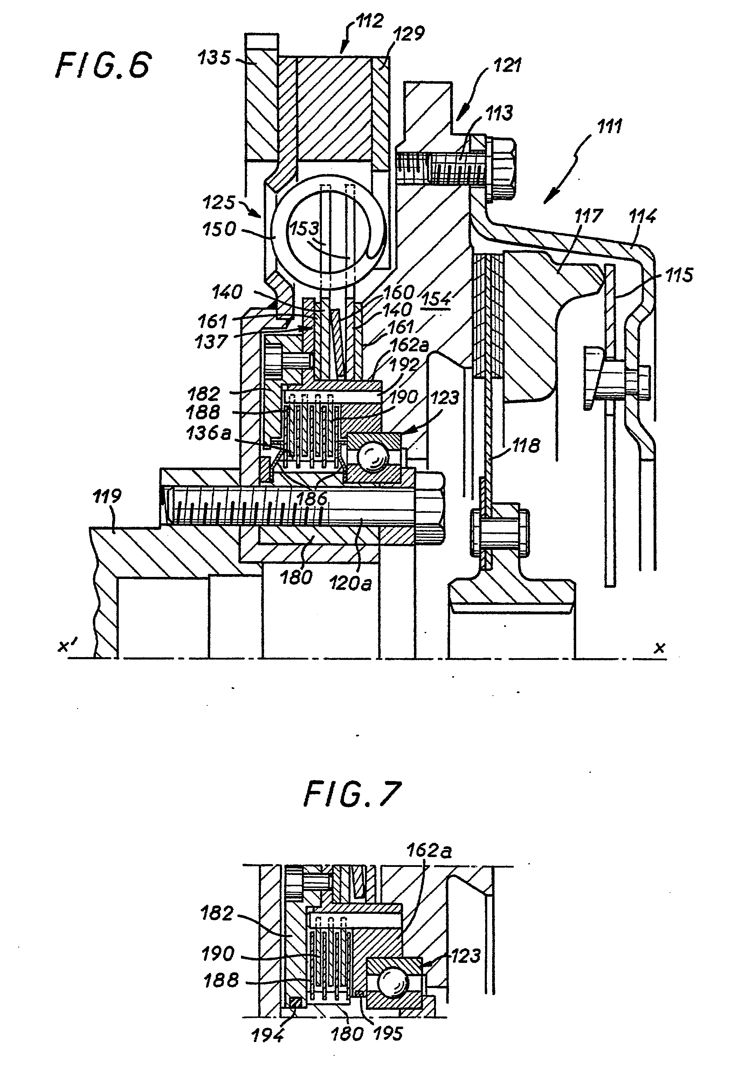

Le volant amortisseur se compose de deux parties coaxiales 120, 121, montées rotatives l'une par rapport à l'autre autour de leur axe commun x'x, à savoir une première partie 120, plus particulièrement fixée à l'arbre menant par des vis 120a et une seconde partie 121, massive, montée sur la première partie 120 par l'intermédiaire d'un roulement à billes 123, cette seconde partie formant plus spécifiquement le plateau de réaction de l'embrayage. La première partie 120 abrite, quant à elle, des moyens élastiques à action circonférentielle 125. Ces derniers sont mécaniquement intercalés entre lesdites parties coaxiales 120 et 121. Ainsi, la partie 120 du volant comporte deux flasques 128, 129 chacun en forme de disque, perpendiculaires à l'axe x'x et maintenus parallèles et espacés l'un de l'autre par une entretoise externe 130 avec laquelle ils sont assemblés au moyen de boulons, rivets ou analogues, traversant des perçages ménagés dans ladite entretoise. Le flasque 128 porte la couronne de démarrage 135. Les moyens élastiques à action circonférentielle 125 comportent plusieurs ressorts hélicoïdaux 150, travaillant à compression, régulièrement interposés circonférentiellement entre des butées appartenant respectivement aux parties coaxiales 120 et 121. Ici, chaque ressort 150 est en appui, d'une part, contre des bords sensiblement radiaux définis le long de fenêtres ménagées dans les flasques 128 et 129 pour abriter ledit ressort et d'autre part contre deux portées 153 de deux voiles 140 parallèles. Les voiles 140 font partie de ladite seconde partie 121 et sont normalement solidaires en rotation de celle-ci par l'intermédiaire d'un limiteur de couple à frottement sec 137, fonctionnellement interposé entre les deux parties coaxiales 120 et 121 et qui sera décrit en détails plus loin. Le volant amortisseur comporte en outre un agencement à amortissement visqueux 126 confiné dans une cavité 136 essentiellement définie dans la seconde desdites parties coaxiales. Plus précisément, cette cavité qui, dans le mode de réalisation de la figure 5, s'étend, autant que faire se peut, au voisinage de la périphérie externe de ladite seconde partie 121, est essentiellement délimitée entre deux disques 154, 155 de ladite seconde partie 121. Le disque 154 forme également le plateau de réaction de l'embrayage. Le disque 155 comporte un épaulement externe par lequel il est appliqué et fixé de façon étanche au moyen de vis 156, au disque 154. La cavité 136 ainsi définie dans la partie menée du volant amortisseur, renferme une ailette 145 en forme de disque annulaire perpendiculaire à l'axe commun x'x des deux parties coaxiales 120, 121. En augmentant la longueur axiale de la cavité, on pourrait bien entendu disposer de plusieurs ailettes imbriquées avec d'autres ailettes solidaires de ladite seconde partie 121, comme décrit en référence aux figures 1 à 4 et aussi en référence à la figure 6. Dans le cas présent cependant, compte tenu de la disposition de l'ailette à la périphérie externe du dispositif, une seule ailette est suffisante. Dans l'exemple décrit, cette ailette 145 est reliée avec jeu circonférentiel à celle desdites parties coaxiales qui ne comporte pas la cavité 136, c'est-à-dire la première partie 120. Pour ce faire, l'ailette est au moins solidaire en rotation d'un moyeu annulaire 146 formant une partie mobile de la cavité. Dans l'exemple, l'ailette comporte un tel moyeu dans sa partie la plus interne. Ce moyeu est monté avec possibilité de rotation par rapport au reste de la cavité, l'étanchéité étant assurée par deux joints toriques 147, coaxiaux. La cavité est remplie d'un fluide visqueux de type non Newtonien, comme indiqué ci-dessus. Le moyeu 146 comporte un pion 149 parallèle à l'axe x'x et ce pion est engagé, ici avec jeu circonférentiel, dans une ouverture 151 pratiquée dans le flasque 129 de ladite première partie 120. Le jeu circonférentiel est obtenu par la forme de l'ouverture 150, allongée dans le sens circonférentiel, non visible sur les dessins.

Le limiteur de couple 137 est constitué des voiles 140, d'un moyen élastique 160 formant rondelle Belleville intercalé entre ces voiles et de deux rondelles de frottement 161. Ces dernières sont respectivement intercalées entre chacun des voiles et une portée annulaire définie sur l'un des éléments constitutifs de ladite seconde partie, à savoir d'une part, une bride annulaire 162 servant par ailleurs au maintien de la cage externe du roulement 123 et, d'autre part, une portée annulaire 163 du plateau de réaction 154. Le moyen élastique 160 tend à écarter les voiles l'un de l'autre et à les solliciter respectivement vers les portées annulaires précitées, par l'intermédiaire des rondelles de frottement 161. La force de serrage développée axialement est telle que les voiles restent normalement solidaires en rotation de ladite seconde partie 121 tant que le couple appliqué auxdits voiles reste inférieur à une valeur prédéterminée.

Le volant amortisseur comporte en outre d'autres moyens de frottement à sec 170, intervenant dès le début du débattement angulaire entre lesdites parties coaxiales 120, 121 et mécaniquement interposé entre celles-ci, pour conférer une certaine hystérésis au fonctionnement du dispositif, lors des inversions du couple. Cet agencement connu en soi ne sera pas décrit en détails. On rappelle qu'il comporte deux rondelles d'appui 175, 176 entre lesquelles est axialement intercalé un moyen élastique, ici une rondelle Belleville 177 et une rondelle de frottement 178 plaquée contre une portée de la bride 162 par la force de la rondelle Belleville 177; la rondelle 175 étant plaquée contre le flasque 128.

Le système qui vient d'être décrit donne de bons résultats principalement en raison du fait que l'hystérésis propre à l'amortissement visqueux est proportionnelle à la vitesse relative entre les deux parties coaxiales. On observe aussi un bon raccordement de caractéristiques entre les deux hystérésis, c'est-à-dire plus particulièrement celles provoquées par les moyens de frottement 170 et par l'agencement à amortissement visqueux. Notamment, dans le cas d'un dépassement faible du seuil de fonctionnement de l'hystérésis de l'agencement à amortissement visqueux, on n'observe aucun saut d'hystérésis susceptible de provoquer un choc, voire un rebond, puisque l'hystérésis est liée, comme mentionné ci-dessus, à la différence de vitesse entre les deux parties coaxiales. Au-delà, l'hystérésis provoquée par l'amortissement visqueux est nécessaire et acquiert une valeur plus élevée que celle qui serait obtenue par un autre dispositif à frottement sec.

Dans le mode de réalisation de la figure 6, les éléments analogues portent les mêmes références numériques qu'à la figure 5, ils ne seront pas décrits à nouveau. Dans cette variante, la cavité 136a est essentiellement délimitée entre la surface externe d'un moyeu 180 solidaire de ladite première partie 120 et un assemblage de brides annulaires 162a, 182, fixées à la seconde partie coaxiale 121. Des moyens d'étanchéité sont interposés entre le moyeu 180 et l'assemblage de brides 162a, 182. Dans l'exemple de la figure 6, ces moyens d'étanchéité consistent en des anneaux profilés élastiques 186, connus en soi, serrés axialement de façon étanche contre des épaulements respectifs du moyeu 180. Les épaulements sont définis aux limites axiales de la cavité 136a. Les anneaux 186 portent élastiquement, par leurs bords externes respectifs, sur des zones circulaires d'éléments de la cavité 136a ou d'éléments solidaires de celle-ci. Plus précisément, l'un des anneaux 186 porte contre un épaulement circulaire de la bride 182, tandis que l'autre porte sur la cage extérieure du roulement 123. Comme dans le cas de la figure 5, la bride 162a porte extérieurement un prolongement annulaire plat définissant une partie du limiteur de couple 137. La cavité 136a abrite des ailettes en forme de disques annulaires perpendiculaires à l'axe x'x. Il s'agit d'un premier groupe d'ailettes 188 solidaires en rotation du moyeu 180, c'est-à-dire de ladite première partie 120 (grâce à des cannelures portées par ce moyeu) et d'un second groupe d'ailettes 190 solidaires en rotation de l'autre partie coaxiale, c'est-à-dire la partie 121; les ailettes des groupes étant imbriquées axialement les unes entre les autres. Dans l'exemple représenté, les ailettes 190 du second groupe peuvent être liées en rotation à la bride 162a grâce à une ou plusieurs goupilles 192 engagées dans des lunules externes des ailettes correspondantes. Un jeu circonférentiel peut être ménagé entre les ailettes d'un groupe et celle des parties coaxiales avec laquelle elles sont entraînées en rotation. Ce jeu peut par exemple être prévu entre les lunules, non visibles sur les dessins, que comportent les ailettes 190 et les goupilles 192. Il est à noter aussi que dans un agencement de ce genre, les ailettes d'un même groupe peuvent être couplées à ladite partie coaxiale avec des jeux différents, permettant d'adapter à volonté la caractéristique d'hystérésis de l'agencement à amortissement visqueux. Ceci est bien entendu possible avec le mode de réalisation de la figure 5, lorsque plusieurs ailettes sont confinées à l'intérieur de la cavité.

La variante de la figure 7 ne se différencie de celle de la figure 6 que par la nature des moyens assurant l'étanchéité de la cavité 136a. Selon cette variante, des joints toriques 194, 195 sont logés dans des gorges respectives des brides 182 et 162a et interposés entre ces brides et le moyeu 180.

Bien entendu, l'invention n'est pas limitée aux quelques modes de réalisation qui viennent d'être décrits. En particulier, l'agencement à amortissement visqueux de la figure 1 ou tout autre agencement réalisant la même fonction, peut être associé à un disque de matériau élastomère fonctionnant en torsion comme sur la figure 3 ou en cisaillement comme sur la figure 4. Inversement, l'agencement à amortissement visqueux décrit en référence aux figures 3 ou 4 peut être combiné à des moyens élastiques à action circonférentielle du genre décrit en référence à la figure 1. C'est dire que l'invention couvre tous les équivalents techniques des moyens mis en jeu si ceux-ci le sont dans le cadre des revendications qui suivent.

**Revendications**

1- Volant amortisseur pour dispositif de transmission de couple, du type comportant au moins deux parties coaxiales (20, 21) montées rotatives l'une par rapport à l'autre autour d'un axe commun (x'x), comprenant des moyens élastiques à action circonférentielle (25) fonctionnellement interposés entre ces deux parties dans lequel une première partie (20) est adaptée à être fixée à un arbre menant et une seconde partie (21), massive, est montée tournante sur la première partie par un roulement à billes ou analogue, ladite seconde partie format un plateau de réaction d'embrayage, caractérisé en ce qu'il comporte un agencement à amortissement visqueux (26) mécaniquement intercalé entre lesdites deux parties coaxiales et confiné à l'intérieur d'une cavité annulaire étanche (36) définie entre celles-ci et remplie d'un fluide visqueux, dans lequel une première partie (20) est adaptée à être fixée à un arbre menant et une seconde partie (21), massive, est montée tournante sur la première partie par un roulement à billes ou analogue, ladite seconde partie formant un plateau de réaction d'embrayage, ledit agencement à amortissement visqueux comporcomportant, à l'intérieur de ladite cavité annulaire, au moins un groupe d'ailettes (45-145) couplé en rotation à l'une desdites parties coaxiales (20-120) par des liaisons de forme (48, 49-58) et en ce qu'un jeu circonférentiel prédéterminé (J) est ménagé dans ces liaisons de forme, de façon à faire disparaître l'amortissement visqueux au-delà d'un seuil de fréquence déterminé par la valeur dudit jeu, ledit fluide visqueux étant de préférence non-Newtonien, par exemple un fluide au silicone.

2- Volant amortisseur selon la revendication 1, caractérisé en ce que ledit agencement à amortissement visqueux comporte, à l'intérieur de ladite cavité annulaire, deux groupes d'ailettes (45, 46) respectivement couplés en rotation auxdites parties coaxiales (20, 21).

3- Volant amortisseur selon la revendication 1, caractérisé en ce que ladite cavité annulaire étanche est délimitée par deux flasques (28, 29) en forme de disques, appartenant à une première (20) desdites parties coaxiales précitées, perpendiculaires audit axe commun et maintenus espacés l'un de l'autre par une entretoise annulaire externe (30) à laquelle ils sont fixés, et par un anneau interne (35) couplé, en rotation à une seconde (21) desdites parties coaxiales, monté à l'intérieur de ladite entretoise annulaire et en contact étanche par ses extrémités axiales avec lesdits flasques.

4- Volant amortisseur selon la revendication 3, caractérisé en ce que les ailettes (45, 46) s'étendent dans des plans radiaux passant par ledit axe commun (x'x), en ce qu'un premier groupe d'ailettes (45) fait saillie radialement intérieurement de ladite entretoise annulaire et en ce qu'un second groupe d'ailettes (46) fait saillie radialement extérieurement dudit anneau interne, une ailette quelconque d'un groupe étant intercalée circonférentiellement entre deux ailettes de l'autre groupe.

5- Volant amortisseur selon la revendication 3, caractérisé en ce que ledit anneau interne (35) est engagé, par des liaisons de forme, avec un jeu circonférentiel (J) prédéterminé sur une surface cylindrique de ladite seconde partie (21).

6- Volant amortisseur selon la revendication 1, caractérisé en ce que lesdites ailettes (45a, 46a) ont la forme de disques annulaires et sont disposées dans des plans parallèles, perpendiculaires audit axe commun (x, x), un premier groupe d'ailettes (45a) étant solidaire en rotation d'une première desdites parties coaxiales tandis qu'un second groupe d'ailettes (46a) est solidaire en rotation d'une seconde desdites parties coaxiales, les ailettes des deux groupes étant imbriquées axialement les unes entre les autres.

7- Volant amortisseur selon la revendication 1, caractérisé en ce que les moyens élastiques à action circonférentielle précités comportent plusieurs ressorts de compression, par exemple des ressorts hélicoïdaux (50), régulièrement interposés circonférentiellement entre des butées appartenant respectivement aux deux parties coaxiales (20, 21) précitées.

8- Volant amortisseur selon la revendication 1, caractérisé en ce que les moyens élastiques à action circonférentielle précités comportent au moins un disque (47, 70) en matériau élastomère monté entre lesdites parties coaxiales (20, 21) et solidaire en rotation de celles-ci.

9- Volant amortisseur selon la revendication 8, caractérisé en ce que ledit disque en matériau élastomère (47) est fixé ou adhérisé par ses faces cylindriques externe (51a) et interne (51b) à des portées cylindriques correspondantes appartenant respectivement aux parties coaxiales (20, 21) précitées, de façon à travailler en torsion.

10- Volant amortisseur selon la revendication 8, caractérisé en ce que ledit disque en matériau élastomère (70) est fixé ou adhérisé par ses faces d'extrémité axiale (73, 74) à des faces en regard appartenant respectivement aux parties coaxiales (20, 21) précitées, de façon à travailler en cisaillement.

11- Volant amortisseur selon la revendication 10, caractérisé en ce que ledit disque en matériau élastomère (70) forme une paroi de ladite cavité annulaire étanche.

12- Volant amortisseur selon la revendication 1, comportant deux parties coaxiales (120, 121) montées rotatives l'une par rapport à l'autre au moyen d'un roulement (123) interposé entre elles, caractérisé en ce qu'il comporte un limiteur de couple à frottement sec (137) interposé entre lesdites deux parties coaxiales.

13- Volant amortisseur selon la revendication 12, caractérisé en ce qu'une cavité annulaire (136) dans laquelle, est confiné un agencement à amortissement visqueux est essentiellement délimitée entre deux disques (154, 155) appartenant à l'une des deux parties coaxiales et assemblés l'un à l'autre, ladite cavité s'étendant au voisinage de la périphérie externe de la partie (121) dans laquelle elle est définie.

14- Volant amortisseur selon la revendication 13, caractérisé en ce que ladite cavité renferme au moins une ailette (145) en forme de disque annulaire, perpendiculaire à l'axe commun desdites deux parties coaxiales.

15- Volant amortisseur selon la revendication 14, caractérisé en ce que ladite ailette (145) est reliée avec jeu circonférentiel à celle (120) desdites parties coaxiales qui ne comporte pas ladite cavité.

16- Volant amortisseur selon la revendication 15, caractérisé en ce que ladite ailette est solidaire au moins en rotation d'un moyeu (146) formant une partie de ladite cavité, monté avec possibilité de rotation par rapport à cette dernière, avec interposition de moyens d'étanchéité (147) et en ce que ce moyeu comporte un pion (149) parallèle audit axe commun et engagé, de préférence avec jeu circonférentiel, dans une ouverture (151) pratiquée dans celle (120) desdites parties coaxiales qui ne comporte pas ladite cavité.

17- Volant amortisseur selon la revendication 16, caractérisé en ce que ladite cavité (136) est définie dans la partie menée (121) dudit volant amortisseur.

18- Volant amortisseur selon la revendication 12, caractérisé en ce que ladite cavité (136a) est essentiellement délimitée entre la surface externe d'un moyeu (180) solidaire de l'une (120) des parties et un assemblage de brides annulaires (162a̲, 182), fixée à l'autre (121) desdites parties coaxiales, des moyens d'étanchéité étant interposés entre ledit moyeu et ledit assemblage de brides.

19- Volant amortisseur selon la revendication 18, caractérisé en ce qu'une bride (126a̲) précitée définissant une face cylindrique externe de ladite cavité est conformée extérieurement pour définir une partie dudit limiteur de couple (137).

20- Volant amortisseur selon la revendication 18 ou 19, caractérisé en ce que ladite cavité (136a̲) abrite des ailettes en forme de disques annulaires perpendiculaires à l'axe commun desdites deux parties coaxiales, respectivement un premier groupe d'ailettes (188) solidaires en rotation de l'une (120) desdites parties coaxiales et un second groupe d'ailettes (190) solidaires en rotation de l'autre (121) desdites parties coaxiales, les ailettes des groupes étant imbriquées axialement les unes entre les autres.

21- Volant amortisseur selon la revendication 20, caractérisé en ce que les ailettes d'un groupe sont couplées avec un certain jeu circonférentiel à celle desdites parties coaxiales avec laquelle elles sont entraînées en rotation.

22- Volant amortisseur selon la revendication 21, caractérisé en ce que les ailettes d'un même groupe sont couplées à ladite partie avec des jeux différents.

23- Volant amortisseur selon l'une des revendications 18 à 22, caractérisé en ce que lesdits moyens d'étanchéité consistent en des joints toriques logés dans des gorges respectives et interposées entre lesdites brides (162a̲, 182) d'une part, et ledit moyeu (180), d'autre part.

24- Volant amortisseur selon l'une des revendications 18 à 22, caractérisé en ce que lesdits moyens d'étanchéité consistent en des anneaux profilés élastiques (186), connus en soi, serrés axialement de façon étanche contre des épaulements respectifs dudit moyeu définis aux limites axiales de ladite cavité et portant élastiquement par leur bord externe sur des zones circulaires d'éléments appartenant à ladite cavité ou solidaires de celle-ci.

## Claims

1. A damper type flywheel for a torque transmission device, of the kind comprising at least two coaxial parts (20, 21) which are mounted for rotation with respect to each other about a common axis (x'x), and including circumferentially acting resilient means (25) operatively interposed between the two said parts, wherein a first part (20) is adapted to be secured to a driving shaft and a second part (21), constituting a mass, is mounted rotatably on the first part through a ball bearing or the like, the said second part constituting a clutch reaction plate, characterised in that it includes a viscous damping means (26) which is mechanically interposed between the said two coaxial parts and which is confined within a sealed annular cavity (36) defined between the said parts and filled with a viscous fluid, the said viscous damping means including, within the said annular cavity, at least one group of fins (45 - 145) which are coupled in rotation with one of the said coaxial parts (20 - 120) through linking elements (48, 49 - 58), and in that a predetermined circumferential clearance (J) is defined in the said linking elements in such a way as to cause the viscous damping effect to disappear beyond a frequency threshold which is determined by the value of the said clearance, the said viscous fluid being preferably non-Newtonian, for example a silicone fluid.

2. A damper type flywheel according to Claim 1, characterised in that the said viscous damping means includes, within the said annular cavity, two groups of fins (45, 46) which are respectively coupled in rotation to the said coaxial parts (20, 21).

3. A damper type flywheel according to Claim 1, characterised in that the said sealed annular cavity is delimited by two radial plates (28, 29) in the form of discs, which are part of a first one (20) of the said coaxial parts, perpendicular to the said common axis and maintained spaced apart from each other by means of an external annular spacer (30) to which they are secured, and by an inner ring (35) which is coupled in rotation to a second one (21) of the said coaxial parts, and which is mounted within the said annular spacer and in sealing contact with the said radial plates through its axial extremities.

4. A damper type flywheel according to Claim 3, characterised in that the fins (45, 46) extend in radial planes intersecting the said common axis (x'x), in that a first group of fins (45) projects radially inwardly from the said annular spacer, and in that a second group of fins (46) projects radially outwardly from the said inner ring, with any one fin of a group being interposed circumferentially between two fins of the other group.

5. A damper type flywheel according to Claim 3, characterised in that the said inner ring (35) is engaged, through linking elements, on a cylindrical surface of the said second part (21) with a predetermined circumferential clearance (J).

6. A damper type flywheel according to Claim 1, characterised in that the said fins (45a̲, 46a̲) are in the form of annular discs and are disposed in parallel planes perpendicular to the said common axis (x'x), a first group of fins (45a̲) being fixed with respect to a first one of the said coaxial parts for rotation therewith, while a second group of fins (46a̲) is fixed with respect to a second one of the said coaxial parts for rotation therewith, the fins of the two groups being interleaved axially with each other.

7. A damper type flywheel according to Claim 1, characterised in that the said circumferentially acting resilient means include a plurality of compression springs, for example helical springs (50), regularly interposed circumferentially between abutment surfaces forming part of the two said coaxial parts (20, 21) respectively.

8. A damper type flywheel according to Claim 1, characterised in that the said circumferentially acting resilient means include at least one disc (47, 70) of elastomeric material, which is mounted between the said coaxial parts (20, 21) and which is secured with respect to the latter for rotation therewith.

9. A damper type flywheel according to Claim 8, characterised in that the said disc of elastomeric material is secured or adhered, through its cylindrical outer face (51a) and its cylindrical inner face (51b), to corresponding cylindrical surfaces which are part respectively of the said coaxial parts (20, 21), so as to work in torsion.

10. A damper type flywheel according to Claim 8, characterised in that the said disc of elastomeric material (70) is fixed or adhered through its axial end faces (73, 74) to facing surfaces forming part respectively of the said coaxial parts (20, 21), so as to work in shear.

11. A damper type flywheel according to Claim 10, characterised in that the said disc of elastomeric material (70) defines a wall of the said sealed annular cavity.

12. A damper type flywheel according to Claim 1, comprising two coaxial parts (120, 121) mounted rotatably with respect to each other through a rolling bearing (123) interposed between them, characterised in that it includes a dry-friction type torque limiter (137) interposed between the said two coaxial parts.

13. A damper type flywheel according to Claim 12, characterised in that an annular cavity (136), in which a viscous damping device is confined, is essentially delimited between two discs (154, 155) forming part of one of the two coaxial parts and assembled with each other, with the said cavity extending into the vicinity of the outer periphery of the part (121) in which it is defined.

14. A damper type flywheel according to Claim 13, characterised in that the said cavity encloses at least one fin (145) in the form of an annular disc, perpendicular to the common axis of the said two coaxial parts.

15. A damper type flywheel according to Claim 14, characterised in that the said fin (145) is connected with a circumferential clearance to that one (120) of the said coaxial parts which does not include the said cavity.

16. A damper type flywheel according to Claim 15, characterised in that the said fin is secured at least in rotation to a hub (146) which defines a part of the said cavity and which is mounted so that it can rotate with respect to the latter with the interposition of sealing means (147), and in that the said hub includes a pin (149) which is parallel to the said common axis and which is engaged, preferably with a circumferential clearance, in an opening (151) which is formed in that one (120) of the said coaxial parts which does not include the said cavity.

17. A damper type flywheel according to Claim 16, characterised in that the said cavity (136) is defined in the driven part (121) of the said damper type flywheel.

18. A damper type flywheel according to Claim 12, characterised in that the said cavity (136a) is essentially delimited between the outer surface of a hub (180) which is fixed with respect to one (120) of the parts and an assembly of annular flanges (162a, 182), fixed to the other one (121) of the said coaxial parts, with sealing means being interposed between the said hub and the said assembly of flanges.

19. A damper type flywheel according to Claim 18, characterised in that a said flange (126a) defining an outer cylindrical face of the said cavity is conformed externally so as to define a part of the said torque limiter (137).

20. A damper type flywheel according to Claim 18 or Claim 19, characterised in that the said cavity (136a) encloses fins in the form of annular discs perpendicular to the common axis of the said two coaxial parts, comprising respectively a first group of fins (188) fixed with respect to one (120) of the said coaxial parts for rotation therewith, and a second group of fins (190) which are fixed with respect to the other one (121) of the said coaxial parts for rotation therewith, the fins of the groups being interleaved axially with each other.

21. A damper type flywheel according to Claim 20, characterised in that the fins of one group are coupled, with a fixed circumferential clearance, to that one of the said coaxial parts with which they are driven in rotation.

22. A damper type flywheel according to Claim 21, characterised in that the fins together constituting a group are coupled to the said part with different clearances.

23. A damper type flywheel according to one of Claims 18 to 22, characterised in that the said sealing means comprise toroidal seals housed in respective grooves and interposed between the said flanges (162a, 182) on the one hand, and the said hub (180) on the other hand.

24. A damper type flywheel according to one of Claims 18 to 22, characterised in that the said sealing means comprise profiled resilient rings (186), known per se, which are urged axially in a sealing manner against respective shoulders of the said hub defined between axial limits of the said cavity, and which bear resiliently, through their outer edge, on circular zones of elements forming part of the said cavity or fixed with respect to the latter.

**Patentansprüche**

1 - Dämpfendes Schwungrad für Drehmomentübertragungsvorrichtung von der Art, die wenigstens zwei koaxiale Teile (20, 21) enthält, welche im Verhältnis zueinander um eine gemeinsame Achse (x'x) drehbar angeordnet sind, bestehend aus elastischen, am Umfang angreifenden Mitteln (25), die funktionell zwischen diesen beiden Teilen eingesetzt sind, dadurch gekennzeichnet, daß die Vorrichtung eine Flüssigkeitsdämpfung (26) aufweist, die mechanisch zwischen den genannten beiden koaxialen Teilen eingesetzt und auf das Innere eines dichten ringförmigen Hohlraums (36) begrenzt ist, der zwischen diesen liegt und mit einer viskosen Flüssigkeit gefüllt ist, wobei ein erster Teil (20) zur Befestigung an einer Antriebswelle geeignet und ein zweiter, massiver Teil (21) am ersten Teil mittels eines Kugellagers oder ähnlichen Vorrichtung drehbar angebracht ist, während der genannte zweite Teil ein Schwungrad bildet, wobei die genannte Flüssigkeitsdämpfung im Innern des genannten ringförmigen Hohlraums wenigstens eine Gruppe von Rippen (45-145) aufweist, die drehbeweglich mit einem der genannten koaxialen Teile (20-120) durch formschlüssige Verbindungen (48, 49-58) gekoppelt sind, und daß ein bestimmtes Umfangsspiel (J) in diesen formschlüssigen Verbindungen in der Weise vorgesehen ist, daß die Flüssigkeitsdämpfung jenseits einer Frequenzschwelle, die durch den Wert des genannten Spiels bestimmt wird, aufgehoben wird, wobei die genannte viskose Flüssigkeit vorzugsweise nicht-Newtonsch ist, z.B. eine Silikonflüssigkeit.

2 - Dämpfendes Schwungrad nach Anspruch 1, dadurch gekennzeichnet, daß die genannte Flüssigkeitsdämpfung im Innern des genannten ringförmigen Hohlraums zwei Gruppen von Rippen (45, 46) aufweist, die jeweils drehbeweglich mit den genannten koaxialen Teilen (20, 21) gekoppelt sind.

3 - Dämpfendes Schwungrad nach Anspruch 1, dadurch gekennzeichnet, daß der genannte dichte, ringförmige Hohlraum durch zwei scheibenförmige Flansche (28, 29) begrenzt wird, der zu einem ersten (20) der vorgenannten koaxialen Teile gehört, die lotrecht zur genannten gemeinsamen Achse verlaufen und durch ein äußeres ringförmiges Zwischenstück (30), woran sie befestigt sind, sowie durch einen Innenring (35) in einem Abstand voneinander gehalten werden, der drehbeweglich mit einem zweiten (21) der genannten koaxialen Teile gekoppelt und im Innern des genannten ringförmigen Zwischenstücks angebracht ist und über seine axialen Enden in dichter Berührung mit den genannten Flanschen steht.

4 - Dämpfendes Schwungrad nach Anspruch 3, dadurch gekennzeichnet, daß sich die Rippen (45, 46) in den radialen Ebenen erstrecken, die durch die genannte gemeinsame Achse (x'x) verlaufen, daß eine erste Gruppe von Rippen (45) radial nach innen vom genannten ringförmigen Zwischenstück übersteht und daß eine zweite Gruppe von Rippen (46) radial nach außen vom genannten Innenring übersteht, wobei eine beliebige Rippe einer solchen Gruppe am Umfang zwischen zwei Rippen der anderen Gruppe eingefügt ist.

5 - Dämpfendes Schwungrad nach Anspruch 3, dadurch gekennzeichnet, daß der genannte Innenring (35) durch formschlüssige Verbindungen mit einem bestimmten Umfangsspiel (J) in eine zylindrische Oberfläche des genannten zweiten Teils (21) eingreift.

6 - Dämpfendes Schwungrad nach Anspruch 1, dadurch gekennzeichnet, daß die genannten Rippen (45a, 46a) die Form ringförmiger Scheiben haben und in parallelen, lotrecht zur genannten gemeinsamen Achse (x'x) verlaufenden Ebenen angeordnet sind, wobei eine erste Gruppe von Rippen (45a) drehbeweglich fest mit einem ersten der genannten koaxialen Teile verbunden ist, während eine zweite Gruppe von Rippen (46a) drehbeweglich fest mit einem zweiten der genannten koaxialen Teile verbunden ist, während die Rippen der beiden Gruppen in axialer Richtung ineinander verschachtelt sind.

7 - Dämpfendes Schwungrad nach Anspruch 1, dadurch gekennzeichnet, daß die vorgenannten, am Umfang wirksamen elastischen Mittel mehrere Druckfedern, z.B. Spiralfedern (50), aufweisen, die in regelmäßigen Abständen am Umfang zwischen Anschlägen eingefügt sind, welche jeweils zu den vorgenannten beiden koaxialen Teilen (20, 21) gehören.

8 - Dämpfendes Schwungrad nach Anspruch 1, dadurch gekennzeichnet, daß die vorgenannten, am Umfang wirksamen elastischen Mittel wenigstens eine Scheibe (47, 70) aus Elastomermaterial aufweisen, welche zwischen den genannten koaxialen Teilen (20, 21) angebracht und drehbeweglich fest damit verbunden ist.

9 - Dämpfendes Schwungrad nach Anspruch 8, dadurch gekennzeichnet, daß die genannte Scheibe aus Elastomermaterial (47) mit seiner zylindrischen Außenfläche (51a) und Innenfläche (51b) mit entsprechenden zylindrischen Flächen verbunden oder verklebt ist, die jeweils zu den vorgenannten koaxialen Teilen (20, 21) gehören, so daß eine Torsionsbewegung möglich wird.

10 - Dämpfendes Schwungrad nach Anspruch 8, dadurch gekennzeichnet, daß die genannte Scheibe aus Elastomermaterial (70) mit ihren axialen Endflächen (73, 74) mit gegenüberliegenden Flächen verbunden oder verklebt ist, die jeweils zu den vorgenannten koaxialen Teilen (20, 21) gehören, so daß eine Scherbewegung möglich wird.

11 - Dämpfendes Schwungrad nach Anspruch 10, dadurch gekennzeichnet, daß die genannte Scheibe aus Elastomermaterial (70) eine Wand des genannten dichten, ringförmigen Hohlraums bildet.

12 - Dämpfendes Schwungrad nach Anspruch 1, bestehend aus zwei koaxialen Teilen (120, 121), die im Verhältnis zueinander mittels eines dazwischen eingefügten Lagers (123) drehbar angebracht sind, dadurch gekennzeichnet, daß ein Trockenreibungs-Drehmomentbegrenzer (137) vorhanden ist, der zwischen den genannten beiden koaxialen Teilen eingesetzt ist.

13 - Dämpfendes Schwungrad nach Anspruch 12, dadurch gekennzeichnet, daß ein ringförmiger Hohlraum (136), worin eine Flüssigkeitsdämpfung untergebracht ist, im wesentlichen durch zwei Scheiben (154, 155) begrenzt ist, die zu einem der beiden koaxialen Teile gehören und miteinander verbunden sind, wobei sich der genannte Hohlraum in Nähe der Außenperipherie des Teils (121), wodurch er begrenzt wird, erstreckt.

14 - Dämpfendes Schwungrad nach Anspruch 13, dadurch gekennzeichnet, daß der genannte Hohlraum wenigstens eine Rippe (145) in Form einer ringförmigen Scheibe umschließt, die lotrecht zur gemeinsamen Achse der genannten beiden koaxialen Teile verläuft.

15 - Dämpfendes Schwungrad nach Anspruch 14, dadurch gekennzeichnet, daß die genannte Rippe (145) mit einem Umfangsspiel mit der Rippe (120) der genannten koaxialen Teile verbunden ist, der den genannten Hohlraum nicht aufweist.

16 - Dämpfendes Schwungrad nach Anspruch 15, dadurch gekennzeichnet, daß die genannte Rippe wenigstens drehbeweglich fest mit einer Nabe (146) verbunden ist, die einen Teil des genannten Hohlraums bildet, angebracht mit der Möglichkeit zur Rotation im Verhältnis zu diesem Hohlraum, unter Zwischenschaltung von Abdichtmitteln (147), und daß diese Nabe einen Stift (149) aufweist, der parallel zur genannten gemeinsamen Achse verläuft und der, vorzugsweise mit einem Umfangsspiel versehen, in eine Öffnung (151) eingreift, die in denjenigen (120) der genannten koaxialen Teile vorgesehen ist, der den genannten Hohlraum nicht aufweist.

17 - Dämpfendes Schwungrad nach Anspruch 16, dadurch gekennzeichnet, daß der genannte Hohlraum (136) im angetriebenen Teil (121) des genannten dämpfenden Schwungrads begrenzt ist.

18 - Dämpfendes Schwungrad nach Anspruch 12, dadurch gekennzeichnet, daß der genannte Hohlraum (136a) im wesentlichen zwischen der Außenfläche einer Nabe (180), die fest mit einem (120) der Teile verbunden ist, und einer Anordnung von ringförmigen Flanschen (162a, 182) begrenzt ist, die an dem anderen (121) der genannten koaxialen Teile befestigt ist, wobei zwischen der genannten Nabe und der genannten Flanschanordnung Abdichtmittel eingesetzt sind.

19 - Dämpfendes Schwungrad nach Anspruch 18, dadurch gekennzeichnet, daß ein vorgenannter Flansch (126a), der eine zylindrische Außenfläche des genannten Hohlraums definiert, außen so ausgebildet ist, daß ein Teil des genannten Drehmomentbegrenzers (137) definiert wird.

20 - Dämpfendes Schwungrad nach Anspruch 18 oder 19, dadurch gekennzeichnet, daß der genannte Hohlraum (136a) Rippen in Form von ringförmigen Scheiben einschließt, die lotrecht zur gemeinsamen Achse der genannten beiden koaxialen Teile verlaufen, bzw. eine erste Gruppe von Rippen (188), die drehbeweglich fest mit dem einen (120) der genannten koaxialen Teile verbunden sind, und eine zweite Gruppe von Rippen (190), die drehbeweglich fest mit dem anderen (121) der genannten koaxialen Teile verbunden sind, wobei die Rippen der Gruppen in axialer Richtung miteinander verschachtelt sind.

21 - Dämpfendes Schwungrad nach Anspruch 20, dadurch gekennzeichnet, daß die Rippen einer Gruppe mit einem bestimmten Umfangsspiel mit demjenigen der genannten koaxialen Teile gekoppelt sind, mit dem sie in Drehbewegung versetzt werden.

22 - Dämpfendes Schwungrad nach Anspruch 21, dadurch gekennzeichnet, daß die Rippen einer gleichen Gruppe mit unterschiedlichen Spielen mit dem genannten Teil gekoppelt sind.

23 - Dämpfendes Schwungrad nach einem der Ansprüche 18 bis 22, dadurch gekennzeichnet, daß die genannten Abdichtmittel aus O-Ringen bestehen, die in den jeweiligen Rillen eingesetzt und zwischen den genannten Flanschen (162a, 182) einerseits und der genannten Nabe (180) andererseits eingefügt sind.

24 - Dämpfendes Schwungrad nach einem der Ansprüche 18 bis 22, dadurch gekennzeichnet, daß die genannten Abdichtmittel aus Profil-Federringen (186) an sich bekannter Bauart bestehen, die axial auf dichte Art und Weise an entsprechende Schultern der genannten Nabe angedrückt werden, die an den axialen Grenzen des genannten Hohlraums definiert sind und mit dem Außenrand elastisch auf kreisförmigen Zonen von Elementen aufliegen, die zum genannten Hohlraum gehören oder fest mit diesem verbunden sind.

*FIG.1*

FIG.2

EP 0 251 849 B1

EP 0 251 849 B1

FIG.3

FIG.4

# FIG.5

*FIG.6*

*FIG.7*